**Europäisches Patentamt**

**European Patent Office**

**Office européen des brevets**

(19)

(11) Veröffentlichungsnummer : **0 307 640 B1**

(12) **EUROPÄISCHE PATENTSCHRIFT**

(45) Veröffentlichungstag der Patentschrift :
05.06.91 Patentblatt 91/23

(51) Int. Cl.⁵ : **G01N 11/14**, G01N 33/00

(21) Anmeldenummer : **88113380.5**

(22) Anmeldetag : **18.08.88**

(54) **Verfahren zur Bestimmung der Flüssigkeitsaufnahme von pulverförmigen Feststoffen.**

(30) Priorität : **20.08.87 DE 3727794**

(43) Veröffentlichungstag der Anmeldung :
**22.03.89 Patentblatt 89/12**

(45) Bekanntmachung des Hinweises auf die
Patenterteilung :
**05.06.91 Patentblatt 91/23**

(84) Benannte Vertragsstaaten :
**AT BE CH DE ES FR GB IT LI LU NL**

(56) Entgegenhaltungen :
**EP-A- 0 216 994**
**DE-A- 1 648 833**
**DE-A- 1 698 118**
**DE-A- 3 606 356**

(73) Patentinhaber : **HÜLS
AKTIENGESELLSCHAFT
Patentabteilung / PB 15 - Postfach 13 20
W-4370 Marl 1 (DE)**

(72) Erfinder : **Markert, Jürgen, Dr.
Am Holzplatz 44
W-4408 Dülmen (DE)**
Erfinder : **Krizek, Milan
Jupiterweg 58
W-4370 Marl (DE)**
Erfinder : **Schübel, Klaus Dieter
Wagnerstrasse 10
W-4354 Datteln (DE)**

## Beschreibung

Die Erfindung betrifft ein Verfahren zum Messen der Flüssigkeitsaufnahme von pulverförmigen Feststoffen. Die Erfindung bezweckt, die maximal mögliche Flüssigkeitsmenge reproduzierbar zu ermitteln, die der pulverförmige Feststoff bis zur Sättigung aufnehmen kann.

Pulverförmige Feststoffe, wie beispielsweise mineralische Füllstoffe für die Kautschukverarbeitung, Ruße und Pigmente, haben die Eigenschaft, Flüssigkeiten aufnehmen zu können, ohne ihre Pulverform zu verlieren. Von besonderer Bedeutung ist die Flüssigkeitsmenge, die der pulverförmige Feststoff maximal aufnimmt, d.h. bis Sättigung eintritt. Ein pulverförmiger Feststoff – im folgenden Pulver genannt – ist ein mineralischer Füllstoff, ein Pigment oder ein Ruß, dessen Schüttdichte in einem breiten Bereich – bis hinab zu extrem niedrigen Werten der Schüttdichte – variieren kann.

Die Flüssigkeitsaufnahme – im folgenden als FA abgekürzt – dient zur Bestimmung der Oberflächeneigenschaften des Pulvers und gibt Hinweise auf die Pulverstruktur und die Verarbeitungseigenschaften des Pulvers. Beispiele hierfür sind die "DBP-Zahl" (Dibutylphthalat-Zahl) bei Rußen und hellen Füllstoffen sowie die "Ölzahl" bei Pigmenten und Füllstoffen.

Nach DIN 53 601 (Dez. 78) und ASTM D 2414-82 wird die Dibutylphthalat (DBP) -Absorption von Rußen mit dem Cabot-Absorptometer bestimmt. Dazu wird die Menge an DBP gemessen, die auf den im Absorptometer gerührten Ruß bis zum Erreichen eines voreingestellten Drehmoments, das deutlich unterhalb des Drehmomentes liegt, bei Zimmertemperatur aufgetropft wurde. Aus der DBP-Absorption läßt sich das Leervolumen des Rußes abschätzen, und Hinweise auf dessen Verarbeitungseigenschaften lassen sich ableiten. In DIN 53 601 wird bei einem Drehmoment von etwa 70% des maximal auftretenden Drehmomentes die Ölzuführung automatisch abgeschaltet. Ferner werden bei diesem Verfahren zwei Eichruße eingesetzt.

Die Knetkammer des Cabot-Absorptometers hat ein Volumen von ca. 50 cm³, das Rotorpaar läuft mit einem Umdrehungsverhältnis von 125 zu 250 pro Minute.

Als Rußmenge werden im allgemeinen 20 g bei einer Schüttdichte von 0,5 g/cm³ empfohlen. Der Füllgrad beträgt dann 80%. In jedem Fall muß die Kneterkammer ausreichend gefüllt sein, weil bei zu wenig gefüllter Kneterkammer Falschmessungen resultieren. Das DBP läuft mit gleichbleibender Geschwindigkeit von 4 ml pro Minute (aber pulsierend) auf den gerührten Ruß.

Es ist weiter bekannt, nach der Ölzahl-Methode gemäß DIN ISO 787 (Febr. 1983) die Menge Lackleinöl zu bestimmen, die unter festgelegten Bedingungen von einer Pigment- oder Füllstoffprobe absorbiert wird. Dabei wird eine Probemenge des Pigment- oder Füllstoffs auf eine Glasplatte gegeben und bei Zimmertemperatur mit einigen Tropfen Lackleinöl betropft. Das Öl wird mit einem Messerspatel in die Probemenge eingerieben. Das Betropfen mit Öl und dessen Einreiben in die Probemenge werden mehrfach wiederholt, bis eine weiche Paste entstanden ist, bis also das Pulver seine Pulverform verloren hat. Das Erkennen des Endpunktes der Ölzugabe ist vom Prüfer abhängig. Die nach diesem Verfahren ermittelten Ölzahlen sind deshalb vorzugsweise als Relativwerte einer Prüfstelle (zwischen Probe und Vergleichsprobe) anzusehen.

Bei beiden Methoden wird die Flüssigkeit (DBP oder Lackleinöl) dem gerührten bzw. geriebenen Pulver bei Raumtemperatur zugegeben, als pulsierender scharfer Strahl im Cabot-Absorptometer bzw. als Tropfen bei der Ölzahl-Methode. Dadurch werden die Pulverteilchen lokal mit Flüssigkeit überladen, wodurch die Meßergebnisse beeinträchtigt werden.

In der DE-OS 36 06 356 ist ein Verfahren zum Messen des Ölaufnahmevermögens von Kautschuk-Pulverbatch angegeben, bei dem der Kautschuk-Pulverbatch in einem Rührwerk gerührt und verwirbelt wird und das Öl auf das gerührte Pulver aufgetragen wird. Der Kautschuk-Pulverbatch wird in einem Planetenmischer gerührt, dessen Kammervolumen zu 10 bis 50% mit Kautschuk-Pulverbatch gefüllt ist. Das Öl wird pulsfrei zu der Zerstäubungseinrichtung gefördert und in Form eines Zerstäubungskegels aus einer oder mehreren Zerstäubungseinrichtungen bei einem zeitlichen konstanten Durchsatz zerstäubt ; die Ölmasse ist gleich der 0,05 fachen bis dreifachen Masse des Kautschuk-Anteils im Kautschuk-Pulverbatch in der Mischkammer und wird in 0,1 bis 5 Minuten zerstäubt. Die Viskosität des Öls wird durch Vorwärmen auf 0,1 bis 50 mPa·s bei Schergeschwindigkeiten von $5 \cdot 10^3$ bis $5 \cdot 10^6$ pro Sekunde eingestellt. Der zeitliche Verlauf des Drehmomentes am Rührermotor wird vor und während des Zerstäubens des Öls bis etwas über den ersten Wendepunkt (mit einem Maximum der ersten Ableitung der Drehmoment-Kurve) hinaus gemessen ; die Ölmenge, die bis zum ersten Wendepunkt auf den Kautschuk-Pulverbatch aufgetragen wurde, wird berechnet.

Aufgabe der Erfindung ist es, ein Verfahren zum Messen der FA von Pulvern zu finden, das für einen breiten Bereich der Schüttdichte von extrem niedrigen bis zu hohen Werten anwendbar ist, wobei das Pulver während des Auftragens der Flüssigkeit verwirbelt wird.

Diese Aufgabe wird erfindungsgemäß bei einem Verfahren der eingangs genannten Art durch die kennzeichnenden Merkmale des Anspruchs 1 gelöst.

Durch das kräftearme Rühren werden die auf die Pulverteilchen wirkenden Scher-, Zug- und Druckkräfte klein gehalten, weil das Kammervolumen nur zu 10 bis 80% (bevorzugt zu 10 bis 40%) mit Pulver gefüllt ist. Die Drehzahlen und die Umfangsgeschwindigkeiten liegen etwa in folgenden Bereichen :

- Drehzahl des Antriebs : 40 bis 100 pro Minute
- Umfangsgeschwindigkeit des Rührers oder des Abstreifers (Planetenbewegung) : 3600 bis 9300 cm pro Minute
- Umfangsgeschwindigkeit des Rührers (Eigendrehung) : 5900 bis 14900 cm pro Minute

Sämtliche Spalte zwischen den Rührwerkzeugen und der Wand der Mischkammer sind mindestens zwanzigmal so groß wie der mittlere Durchmesser der Pulverteilchen.

Die Flüssigkeit wird zu der Auftragsvorrichtung aus dem Vorratstank pulsfrei gefördert und (bevorzugt oberhalb des gerührten Pulvers) in Form eines (hohlen oder vollen) Zerstäubungskegels fein zerstäubt und von oben auf das Pulver befördert. Dazu dienen eine oder mehrere Zerstäubungseinrichtungen, die als Einstoff- oder Zweistoffdüse mit mäßig großem Druck oder mit Hochdruck betrieben werden können.

Der Flüssigkeitsdurchsatz durch die Auftragsvorrichtung wird auf einen zeitlich konstanten Wert eingestellt. Während 0,1 bis 10 Minuten wird eine Flüssigkeitsmasse aufgesprüht, die der 0,05 fachen bis sechsfachen Masse des Pulvers entspricht, das sich in der Mischkammer befindet. Die Viskosität der Flüssigkeit wird bei Bedarf durch Vorwärmen auf 0,1 bis 50 mPa · s bei Schergeschwindigkeiten von $5 \cdot 10^3$ bis $5 \cdot 10^6$ pro Sekunde an der engsten Stelle der Zerstäubungsdüse eingestellt. Die geeignete Viskosität erreicht man je nach Beschaffenheit der aufzutragenden Flüssigkeit gegebenenfalls bei erhöhter Temperatur.

Der Rührwerksantrieb ist mit einer bekannten Vorrichtung zum Messen des Drehmomentes ausgerüstet. Der zeitliche Verlauf des Drehmomentes wird bevorzugt auf einem Schreiber registriert. Die gegebenenfalls auftretende Unruhe der Registrierkurve, die von nebensächlichen Einflüssen herrührt, wird nicht weiter beachtet oder bei der Auswertung durch das Verfahren des gleitenden Mittelwertes eliminiert.

Mit wachsender Menge der aufgesprühten Flüssigkeit steigt das Drehmoment zuerst langsam und später steil bis zu einem Maximum an ; in einigen Fällen kann man mehr als einen Wendepunkt im Anstiegsbereich der Kurve beobachten. Nach Durchlaufen des Maximums fällt das Drehmoment im allgemeinen steil ab. Die bis zum Maximum des Drehmomentes auf das Pulver aufgesprühte Flüssigkeitsmenge, die Zeitdifferenz vom Beginn des Sprühens bis zum Maximum ($t_{max} - t_o$) sowie die Höhe des Maximums ($M_{max} - M_o$) werden gemessen.

Das erfindungsgemäße Verfahren hat folgende Eigenschaften und Vorteile :

- Die FA kann auch für Pulver mit extrem niedriger Schüttdichte gemessen werden, bei denen bisher keine reproduzierbaren Messungen möglich waren.
- Es ist für Pulver mit extrem niedriger, mittlerer und hoher Schüttdichte – also von 0,02 bis 3 g/cm³, vorzugsweise 0,04 bis 1,2 g/cm³ – und damit universell anwendbar.
- Örtliche Überladung der Pulverteilchen mit Flüssigkeit und damit eine Verfälschung der Meßergebnisse werden durch die gleichmäßige Verteilung der aufgesprühten Flüssigkeit vermieden.
- Es können Flüssigkeiten mit ganz unterschiedlicher Beschaffenheit aufgetragen werden, weil deren Viskosität bis zur Bildung des Sprühnebels durch Erhöhen der Flüssigkeitstemperatur auf einen geeigneten Wert eingestellt wird.
- Die Pulverteilchen werden nur wenig beansprucht ; ihre Oberflächen sind für die aufgesprühte Flüssigkeit sehr gut zugänglich.
- Durch die weitgehende Separierung der Pulverteilchen werden die gewöhnlich durch Agglomeratbildung hervorgerufenen Scheinstrukturen mit engen Zwischenräumen zwischen den Teilchen vermieden. Damit wird im wesentlichen nur die FA auf den und innerhalb der Pulverteilchen selbst bestimmt.
- "Eichpulver", wie z.B. Eichruße, werden nicht eingesetzt.
- Die FA wird bis zum Erreichen des maximalen Drehmomentes (und etwas darüber hinaus) gemessen.
- Das Kammervolumen kann bis zu 80% mit Pulver gefüllt werden, die Masse der aufgetragenen Flüssigkeit kann bis zum Sechsfachen der Pulvermasse und die Zerstäubungszeit bis 10 Minuten betragen.

Die Erfindung wird anhand der folgenden Figuren weiter erläutert.

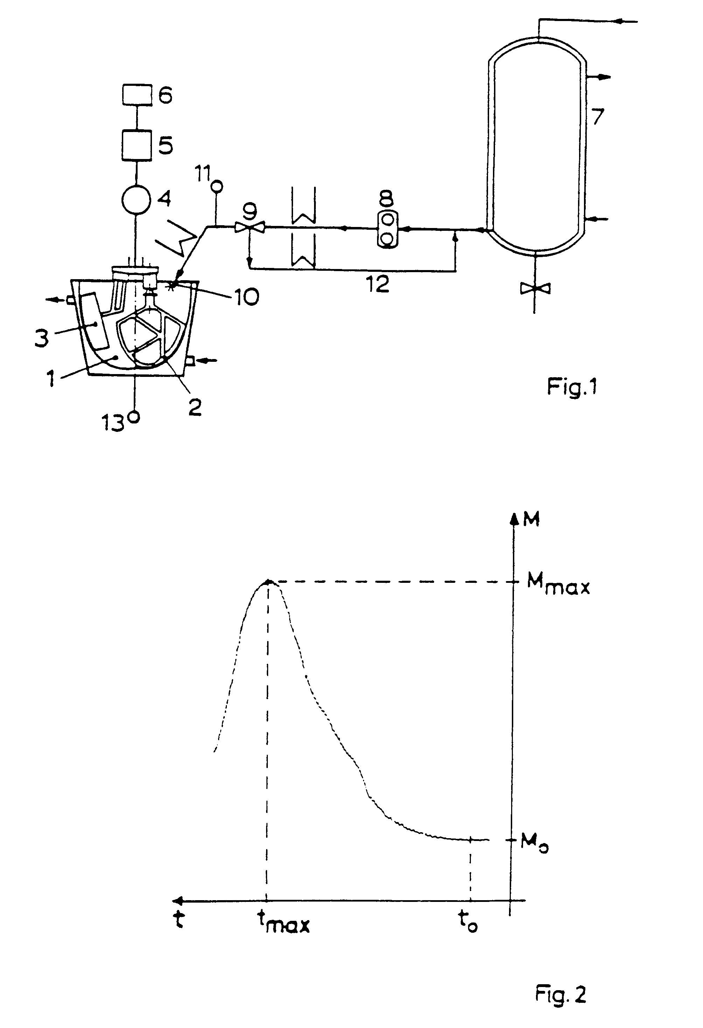

Figur 1 zeigt beispielhaft eine Vorrichtung zur Durchführung des erfindungsgemäßen Verfahrens. Das Mischgefäß (1) (mit Flüssigkeitsmantel zwecks Thermostatisierung) enthält ein Planetenrührwerk, bestehend aus rotierendem Rührflügel (2) und Abstreifer (3), das vom Antrieb (4) (mit einstellbarer Drehzahl und Drehzahlregelung) angetrieben wird. Der Rührwerksantrieb ist mit der Drehmomentmeßvorrichtung (5) (mit mehreren Drehmomentmeßbereichen) und diese mit der Anzeigevorrichtung (6) verbunden.

Der Vorratsbehälter (7) (bei Bedarf mit Flüssigkeitsmantel zwecks Thermostatisierung) für die aufzutragende Flüssigkeit ist über eine Leitung an die Zahnradpumpe (8) (mit Überdrucksicherung) angeschlossen, die druckseitig über ein Dreiwegeventil (9) mit der Zerstäubungseinrichtung (10) verbunden ist, die im Deckel des Mischergefäßes angebracht ist. Vor der Zerstäuberdüse ist die Druckmeßstelle (11) vorhanden. Das Ventil (9) ist außerdem über die Rücklaufleitung (12) mit der Saugseite der Zahnradpumpe verbunden. Die Temperatur des gewirbelten Pulvers wird bei Bedarf mit dem Temperaturfühler (13) gemessen. Sämtliche Leitungen zwischen Vorratsbehälter und Zerstäuberdüse sowie die Rücklaufleitung sind – bevorzugt elektrisch – beheizbar. Die Zahnradpumpe und das Ventil sind wärmeisoliert.

Alle zum Durchführen des erfindungsgemäßen Verfahrens nebensächlichen Vorrichtungen sind in Figur 1 nicht eingezeichnet.

Das erfindungsgemäße Verfahren wird mittels der in Figur 1 dargestellten Vorrichtung beispielsweise wie folgt durchgeführt : Der beheizbare Vorratsbehälter wird mit der aufzutragenden Flüssigkeit gefüllt und – bei Bedarf – auf die vorgegebene Temperatur gebracht, damit die Viskosität der Flüssigkeit im angegebenen Bereich liegt. Die Heizung der Leitungen wird – bei Bedarf – auf dieselbe Temperatur eingestellt. Das Dreiwegeventil wird zur Rücklaufleitung geöffnet und zur Leitung der Zerstäubungseinrichtung geschlossen ; die Zahnradpumpe wird eingeschaltet und auf einen Förderstrom eingestellt, der größer ist als der für die Zerstäubung benötigte Flüssigkeitsstrom.

Das auf Raumtemperatur befindliche oder – bei Bedarf – thermostatisierte Mischergefäß wird mit dem auf Raumtemperatur befindlichen Pulver beschickt. Das noch flüssigkeitsfreie Pulver wird gewirbelt, bis sich ein konstantes Drehmoment eingestellt hat ; dieses wird im allgemeinen nach etwa 0,1 bis 1 Minute erreicht. Dann wird das Dreiwegeventil umgestellt, und der für die Zerstäubung und den vorgegebenen Flüssigkeitsstrom notwendige – in einem Vorversuch ermittelte – Druck vor der Zerstäuberdüse stellt sich innerhalb weniger Sekunden ein. Während des Zerstäubens der Flüssigkeit wird das Drehmoment weiter registriert, bis das Maximum der Drehmomentkurve sicher erkennbar ist.

Das Verfahren kann nach bekannten Methoden weitgehend automatisiert werden.

Aus der Drehmomentkurve entnimmt man die Zeit, die vom Beginn des Flüssigkeitsauftrages bis zum Erreichen des Drehmomentmaximums verstrichen ist. Die absolute FA ist das Produkt aus dem Volumendurchsatz der Flüssigkeit und der Dauer des Flüssigkeitsauftrages bis zum Maximum des Drehmomentes ; den Volumendurchsatz kann man mittels der Dichte der Flüssigkeit in den Massendurchsatz umrechnen. Die relative FA erhält man, wenn man die absolute FA durch die Masse des im Mischergefäß vorgelegten Pulvers dividiert.

Das erfindungsgemäße Verfahren wird anhand des folgenden Beispiels, für das eine Apparatur entsprechend Figur 1 verwendet wird, weiter erläutert.

Der Vorratsbehälter wird mit Ethylenglykol gefüllt. In das auf Raumtemperatur befindliche Mischergefäß mit 2,5 Liter Kammervolumen werden 100 g (entsprechend 833 cm³ Schüttvolumen) pulverförmiger aktiver Kieselsäure eingefüllt. Man rührt und verwirbelt zunächst das noch flüssigkeitsfreie Pulver etwa 1 Minute lang bei einer Drehzahl des Antriebs von 75 pro Minute. Während dieser Zeit stellt sich ein konstantes Drehmoment am Rührer ein. Das Ethylenglykol zirkuliert bei Raumtemperatur über Zahnradpumpe und Rücklaufleitung im Kreis. Die Drehzahl der Zahnradpumpe wird in einem Vorversuch auf den vor der Zerstäubungsdüse gewünschten Druck von 6 bar eingestellt. Nach Ablauf von einer Minute wird das Dreiwegeventil umgestellt. Binnen weniger Sekunden baut sich vor der Zerstäubungsdüse ein konstanter Druck von 6 bar auf. Die Flüssigkeit wird mit 72 Milliliter pro Minute gefördert, durch die Düse zerstäubt (Hohlkegelzerstäubung), auf das gerührte Pulver aufgesprüht und von diesem aufgenommen.

Während des Versuchs (einschließlich der Vorlaufzeit) wird das Drehmoment als Funktion der Zeit registriert. Der Versuch wird beendet, wenn das Maximum der Drehmomentkurve überschritten und eindeutig erkennbar ist und zuverlässig ermittelt werden kann.

Beim vorliegenden Versuch wird das Maximum der Drehmomentkurve nach 298 Sekunden erreicht, gerechnet ab Beginn des Aufsprühens des Ethylenglykols ; der Versuch wird nach etwa 340 Sekunden abgebrochen. Bis zum Maximum des Drehmomentes hat die aktive Kieselsäure 357,6 Milliliter Ethylenglykol aufgenommen. Das Drehmoment beim Maximum beträgt etwa 6 Newtonmeter.

Analog zu diesem Beispiel werden verschiedene Ruße und helle Füllstoffe untersucht, bei denen mit den bisher üblichen Methoden die FA nicht gemessen werden kann.

In Figur 2 ist eine für das erfindungsgemäße Verfahren typische Kurve dargestellt. Das Drehmoment M ist als Funktion der Zeit t aufgetragen. Bis zum Zeitpunkt $t_0$ des Beginns des Flüssigkeitsauftrages hat sich das konstante Drehmoment $M_0$ eingestellt. Zum Zeitpunkt $t_{max}$ ist das Maximum des Drehmomentes $M_{max}$ erreicht. Die zum Maximum gehörende Zeit $t_{max}$ kann aus der Kurve direkt entnommen werden. Mittels der Differenz $t_{max} - t_0$ wird die FA des Pulvers berechnet.

Die Differenz $t_{max} - t_0$ liegt erfahrungsgemäß zwischen 0,1 und 8 Minuten.

## Ansprüche

1. Verfahren zum Messen des Flüssigkeitsaufnahmevermögens von Pulver, bei dem das Pulver in einem Rührwerk gerührt und verwirbelt wird, die Flüssigkeit auf das gerührte Pulver aufgetragen und der zeitliche Verlauf des Drehmomentes am Rührermotor gemessen wird, gekennzeichnet durch

– Rühren des Pulvers in einem Planetenmischer, dessen Kammervolumen zu 10 bis 80% mit Pulver gefüllt ist,

– pulsfreies Fördern der Flüssigkeiten zu der Auftragseinrichtung,

– Zerstäuben der Flüssigkeit in Form eines Zerstäubungskegels aus einer oder mehreren Zerstäubungseinrichtungen bei einem zeitlich konstanten Durchsatz, mit dem eine Flüssigkeitsmasse, die gleich der 0,05 fachen bis sechsfachen Masse des Pulvers in der Mischerkammer ist, in 0,1 bis 10 Minuten zerstäubt wird,

– Einstellen der Viskosität je nach Beschaffenheit der Flüssigkeit durch Vorwärmen auf 0,1 bis 50 mPa · s bei Schergeschwindigkeiten von $5 \cdot 10^3$ bis $5 \cdot 10^6$ pro Sekunde,

– Messen des zeitlichen Verlaufs des Drehmomentes am Rührermotor vor und während des Zerstäubens der Flüssigkeit bis etwas über das Maximum der Drehmomentkurve hinaus, Messen der Zeitdifferenz vom Beginn des Sprühens bis zum Maximum, Messen der Höhe des Maximums,

– Berechnen der Flüssigkeitsmenge, die bis zum Maximum auf das Pulver aufgetragen wurde, und Berechnen der Flüssigkeitsaufnahme des Pulvers.

2. Verfahren nach Anspruch 1, gekennzeichnet durch

– Rühren des Pulvers in einem Planetenmischer, dessen Kammervolumen zu 10 bis 40% mit Pulver gefüllt ist.

3. Verfahren nach Anspruch 1 oder 2, gekennzeichnet durch

– ein Pulver mit einer Schüttdichte von 0,02 bis 3 g/cm³, vorzugsweise von 0,04 bis 1,2 g/cm³.

## Claims

1. A method for measuring the liquid absorption capacity of powder, in which the powder is stirred and whirled up in a stirrer unit, the liquid is applied to the stirred powder and the course in time of the torque on the stirrer motor is measured,
Characterised by

– stirring of the powder in a planetary mixer, whose chamber volume is filled with powder to the extent of 10 to 80%,

– pulse-free delivery of the liquids to the application device,

– atomisation of the liquid in the form of an atomisation cone from one or more atomisation devices at a throughput which is constant in time and at which a mass of liquid which is equal to 0.05 times to six times the mass of the powder in the mixer chamber is atomised in 0.1. to 10 minutes,

– adjustment of the viscosity, by preheating depending on the nature of the liquid, to 0.1 to 50 mPa · s at shear rates from $5 \times 10^3$ to $5 \times 10^6$ per second,

– measurement of the course in time of the torque on the stirrer motor before and during the atomisation of the liquid up to slightly beyond the maximum of the torque curve, measurement of the time difference from the start of spraying up to the maximum and measurement of the height of the maximum,

– calculation of the quantity of liquid which was applied to the powder up to the maximum, and calculation of the liquid absorption of the powder.

2. A method according to claim 1, characterised

– stirring of the powder in a planetary mixer, whose chamber volume is filled with powder to the extent of 10 to 40%.

3. A method as claimed in claim 1 or 2, characterised by

– a powder having a bulk density from 0.02 to 3 g/cm³, preferably from 0.04 to 1.2 g/cm³.

## Revendications

1. Procédé pour mesurer le pouvoir d'absorption de liquide d'une poudre, dans lequel la poudre est agitée dans un dispositif agitateur et mise à tourbillonner, dans lequel le liquide est apporté sur la poudre agitée et dans lequel la variation dans le temps du couple du moteur de l'agitateur est mesurée, caractérisé par le fait que :

– Que l'on effectue l'agitation de la poudre dans un mélangeur planétaire dont le volume de chambre est rempli avec 10 à 80% de poudre,

– Que l'on délivre les liquides sans pulsion au dispositif d'apport,

– Que l'on pulvérise le liquide sous la forme d'un cône de pulvérisation provenant d'un ou plusieurs dispositifs pulvérisateurs, avec un débit constant dans le temps pour lequel une masse de liquide, d'une valeur de 0,05 à six fois la masse de la poudre dans la chambre de mélange, est pulvérisée pendant 6 secondes à 10 minutes,

– Que l'on ajuste la viscosité par préchauffage, selon la consistance du liquide, à une valeur de 0,1 à 50 mPa · s, pour des vitesses de cisaillement de $5 \cdot 10^3$ à $5 \cdot 10^6$ par seconde.

– Que l'on mesure la variation dans le temps du couple du moteur de l'agitateur avant et pendant la pulvérisation du liquide jusqu'à léger dépassement du maximum de la courbe du couple, en mesurant également le temps s'écoulant du début de la pulvérisation jusqu'au maximum, dont on mesure la valeur,

– Que l'on calcule la quantité de liquide qui a été apportée jusqu'au maximum, ainsi que l'absorption de liquide par la poudre.

2. Procédé selon la revendication 1, caractérisé par le fait :

– Que l'on agite la poudre dans un mélangeur planétaire dont le volume de chambre est rempli de poudre à raison de 10 à 40%.

3. Procédé selon la revendication 1 ou 2, caractérisé par le fait que l'on fait appel à une poudre présentant une densité en vrac de 0,02 à 3 g par centimètre cube, de préférence de 0,04 à 1,2 g/cm$^3$.

Fig.1

Fig. 2